# EUROPÄISCHE PATENTSCHRIFT

(11) **EP 0 904 931 B1**
(45) Veröffentlichungstag und Bekanntmachung des Hinweises auf die Patenterteilung: **13.06.2001**
(21) Anmeldenummer: 98117630.8
(22) Anmeldetag: 17.09.1998
(51) Int. Cl.: B29D 30/20, B29D 30/24

(54) **Verfahren und Trommel als Vorrichtung zum Aufbau eines Reifenrohlings**
Method for manufacturing a tyre carcass and drum used as an apparatus for carrying out the method
Procédé de fabrication d'une carcasse de pneu et tambour utilisé comme un dispositif pour la mise en oeuvre de ce procédé

(30) Priorität: 24.09.1997 DE 19742035
(43) Veröffentlichungstag der Anmeldung: 31.03.1999
(73) Patentinhaber: Continental Aktiengesellschaft, 30165 Hannover (DE)
(72) Erfinder: Sergel, Horst, 30657 Hannover (DE); Menell, Hans, 30453 Hannover (DE)

(56) Entgegenhaltungen:
- EP-A- 0 396 495
- DE-A- 2 545 381
- US-A- 3 503 829
- US-A- 4 060 445

## Beschreibung

Die Erfindung bezieht sich gemäß Anspruch 1 auf ein Verfahren zum Aufbau eines Reifenrohlinges und geht aus von dem durch die DE-OS 25 45 381 geschaffenen Stande der Technik. Die Erfindung bezieht sich ferner auf eine expandierbare Trommel nach dem Oberbegriff des Patentanspruches 4, die eine notwendige Vorrichtung darstellt zur Verwirklichung des Verfahrens nach Anspruch 1.

Übereinstimmend mit genannter DE-OS 25 45 381 werden bei der Erfindung mittels einer ersten Vorrichtung die Wulstkerne - vorzugsweise Pierce-Kerne für PKW und Hexagonal-Kerne für LKW - hergestellt. Vorteilhafterweise wird noch auf dieser Vorrichtung der Kernreiter (auch als Kernfüllprofil oder Apex bezeichnet) auf jeden Wulstkern aufgebracht, wie dies an sich bekannt ist. Auf einer anderen Vorrichtung, nämlich einer radial expandierbaren Trommel mit im wesentlichen horizontaler Rotationsachse und mit einer die Trommelperipherie bildenden, für die Vergleichmäßigung der Pressung genügend dickwandigen Hülle aus Gummi oder dergleichen, wird die Karkasse zunächst flach liegend aufgebaut (=konfektioniert). Die Karkassenkonfektion beginnt vorzugsweise mit dem Auflegen der Seitenwände und/oder des besonders luftdichten Innenliners. Danach werden vorzugsweise ein oder mehrere wulstverstärkende Profile aufgelegt, auch "Chafer" genannt. Diese Profile können textile oder - insbesondere bei hochbelasteten Nutzfahrzeug-Reifen - metallische Festigkeitsträger enthalten. Danach wird die erste und ggf. die zweite Karkasslage aufgebracht, die in üblicher Weise textile und/oder metallische Festigkeitsträger in axialer Anordnung enthalten sollte.

In weiterer Übereinstimmung mit der DE-OS 25 45 381 werden danach die Wulstkerne über die Trommel geschoben und axial positioniert. Danach werden die vorgefertigten Wulstkerne und die flach liegende Karkasse radial gegeneinander gepresst durch eine Expansion der Trommel. Diese Pressung dient der Haftung zwischen der inneren Oberfläche der Wulstkerne und der äußeren Oberfläche der Karkasse. Danach wird die Trommel auf einen kleineren Durchmesser zusammen gefahren und die Karkasse samt gesetzter Wulstkerne von der Trommel abgezogen, um sie zu einer Bombiereinrichtung zu befördern.

Das Schieben der Wulstkerne über die auf der Trommel befindliche Karkasse, das axiale Positionieren der Wulstkerne darauf sowie das nachfolgende radiale Gegeneinanderpressen der Wulstkerne und der Karkasse werden in der Fachsprache zusammenfassend als "Kernsetzen" bezeichnet. Die Erfindung betrifft allein die Technik des Kernsetzens, noch genauer die Art der zur Haftungserzielung erforderlichen Pressung zwischen dem vorgefertigten Kern und der Karkasse. Darum werden die weiteren - an sich bekannten - Verfahrensschritte zur Komplettierung des Reifenrohlinges nur kurz erwähnt:

Auf der Bombiereinrichtung werden die axial außerhalb der gesetzten Wulstkerne befindlichen Randbereiche der Karkasse umgebuckt, sodass diese an der axial äußeren Fläche des jeweiligen Wulstkernes und an der axial äußeren Seite des in der Regel vorhandenen Kernreiters und evt. auch noch an der axial äußeren Seite der Karkasse selbst haftend anliegen. Dazu wird üblicherweise die Karkasse unter den Wulstkernen mittels expandierbarer Ringe zentrisch festgeklemmt, wobei diese Festklemmringe axial verschieblich sind. Ein in der axialen Mitte der Bombiervorrichtung angeordneter - während des Karkassenbeförderns zur Trommel hin und der Reifenrohlingsbeförderung von der Trommel weg kollabierter - Balg wird sodann gebläht, legt sich dabei an die Innenwand der Karkasse an und erhebt diese zwischen den Wulstkernen.

Danach werden die axial außerhalb der gesetzten Wulstkerne befindlichen Randbereiche umgebuckt und die Karkasse wird währenddessen oder danach bombiert. Anschließend wird die Karkasse weiter komplettiert - insbesondere mit Gürtellagen und Laufstreifen - zu einem Reifenrohling.

Falls - wie üblich - Kernreiter eingebaut werden, so sind diese spätestens unmittelbar vor dem Karkassumbuck aufzusetzen; wie bereits erwähnt, werden sie aber bevorzugt schon sofort nach der Kernherstellung auf die Kerne aufgebracht. Die bevorzugt gleich zu Beginn der Konfektion aufgebrachten Seitenstreifen werden zweckmäßigerweise erst später, nämlich nach der Bombage, nach oben geschlagen mittels je eines Blähbalges axial außen eines jeden gesetzten Kernes.

Bei vielen Reifen sind zwischen der untersten Gürtellage und der - ggf. obersten - Karkasslage links und rechts je ein Schulterprofil angeordnet. Existenz, Gestalt und Anordnung auch dieser Schulterprofile sowie die Frage, ob sie auf die Karkasse im flach liegenden oder im bombierten Zustande aufgebracht wird, beeinflussen die Funktionstüchtigkeit der Erfindung nicht.

Nach Umbuck und Bombage wird der Rohling irgendwie weiter komplettiert, bevorzugt in üblicher Weise, also mit Gürtellagen, ggf. einer Bandage, und mit - sofern nicht schon zu Beginn aufgebracht - Seitenwänden und mit einem ggf. mehrschichtigen Laufstreifen belegt. Auf die Anzahl der Gürtellagen, deren Festigkeitsträger-Ausrichtung und -Ausbildung, Existenz und Art einer Bandage, Art und Aufbau des Laufstreifens, Reihenfolge des Aufbringens der Laufstreifen-Schichten und Seitenwände, kurzum auf die Art der weiteren Komplettierung, kommt es für diese Erfindung nicht an.

Eine andere vorbekannte Technik zur Herstellung einer von Luftblasen freien Haftung zwischen Karkasse und Wulstkern besteht darin, dass der Kern nicht auf einer separaten Vorrichtung hergestellt wird, sondern - nach Auflegen der bis zum Kernsetzen aufzubringenden Karkasslagen - direkt auf der Trommel durch Aufspulen hergestellt wird. Diese alte Technik hat aber verschiedene Nachteile:

Erstens sind so nur solche Wulstkern-Querschnittsformen möglich, die eine parallel zur Trommeloberfläche verlaufende Innenseite aufweisen, also ohne besondere Maßnahmen kein Hexagonal-Kern, wie für LKW-Reifen bevorzugt.

Zweitens wird der Ausstoß der zum Rohlingsaufbau verwendeten sehr teuren Trommel mitsamt ihrer Peripheriegeräte wie Servicer, Antriebseinheit, Anroller etc. um die Zeit für den Kernaufbau verlangsamt; die Bereithaltung einer separaten Kernaufbauvorrichtung ist aber schon augrund ihres geringen Platzbedarfes viel billiger als die Bereithaltung zusätzlicher Aufbautrommeln zum Rohlingsaufbau um den gleichen Rohlingsausstoß pro Zeit zu erreichen.

Drittens ist es besonders zweckmäßig, die Kerne direkt hinter dem die Kerndrähte mit Kautschuk umspritzenden Extruder zu wickeln; dort ist der Kautschuk noch besonders fließwillig und die Oberfläche nicht gefährdet durch Staubeintrag. Angesichts der zahlreichen erforderlichen Zubringer an einer Reifenaufbautrommel ist aber kaum ein Platz für einen oder zwei solcher Extruder in der Nähe der Aufbautrommel zu finden.

Bei der erstgenannten Technik, bei der mittels einer ersten Vorrichtung die Wulstkerne hergestellt werden und auf einer zweiten Vorrichtung, einer radial expandierbaren Trommel die Karkasse konfektioniert wird, beginnt die Karkassenkonfektion gemäß der geläufigsten Verfahrensvariante auf einem kleineren Durchmesser als dem dieser Trommel maximal möglichen.

Dieser kleinere Trommeldurchmesser ist so bemessen, dass der Außendurchmesser der Karkasse bis zum Kernesetzen noch etwas kleiner ist als der Innendurchmesser der zu setzenden Wulstkerne; dem Fachmann ist die Bemessung des erforderlichen Mindestspieles zwischen Karkassaußenseite und Wulstkerninnenseite zur Vermeidung eines vorzeitigen Kontaktes zwischen beiden aus jahrzehntelanger Erfahrung geläufig.

Danach werden die Wulstkerne über die Trommel geschoben und axial positioniert. Danach wird die Trommel zumindest in dem axialen Bereich, in dem die Wulstkerne positioniert sind, auf einen solchen Durchmesser expandiert, dass der unverspannte Außendurchmesser der Karkasse in diesem Bereich größer ist als der unverspannte Innendurchmesser der vorgefertigten Wulstkerne; durch diese Maßdifferenz werden die vorgefertigten Wulstkerne und die flach liegende Karkasse radial gegeneinander gepresst. Durch die so aufgebaute Pressung wird eine ausreichende Haftung zwischen der inneren Oberfläche der vorgefertigten Wulstkerne und der äußeren Oberfläche der bis dahin - flach liegend - gefertigten Karkasse erzielt.

Von dieser zum Anmeldezeitpunkt gängigen Durchmesserabfolge abweichend schlägt die DE-OS 25 45 381 aus dem Jahre 1975 zur dichteren Packung von Festigkeitsträgern vor,
- die Karkasse auf einem Trommeldurchmesser aufzubauen, der größer ist als der Innendurchmesser der Kerne und
- vor dem Aufschieben der Wulstkerne auf die Trommel den Durchmesser der Trommel unter Umfangsstauchung der hierauf befindlichen Karkasse soweit zu verringern, dass die Wulstkerne frei über die Karkasse bewegt werden können.

In der einen wie der anderen vorbekannten Verfahrensvariante wird danach die Trommel auf einen kleineren Durchmesser zusammengefahren und die Karkasse samt gesetzter Wulstkerne von der Trommel abgezogen. Sie wird dann zu einer Bombiervorrichtung befördert.

Reifenhersteller sind dem Druck ihrer Kunden - besonders der Erstausrüster - ausgesetzt, den Reifenrundlauf weiter zu verbessern. Dies geschieht bislang durch Maßnahmen nach der Reifenvulkanisation, von denen das Beschleifen der Lauffläche an Stellen zu großer Radialkraft die bekannteste ist.

Die Erfinder haben sich die Aufgabe gestellt, auch durch Maßnahmen vor der Reifenvulkanisation den Rundlauf des Reifens nach der Vulkanisation zu verbessern.

Ein Verfahren nach Patentanspruch 1 löst diese Aufgabe.

Eine wesentliche neue vorrichtungsmäßige Vorraussetzung ist die Anordnung irgendwelcher Negative in der Peripherie der Trommel, die evakuierbar sind. Diese Negative sind zweckmäßigerweise als ein System von Rillen ausgebildet, die an einigen wenigen, im folgenden als "Gully" bezeichneten, Stellen zusammenlaufen und von dort über einen die Peripherie nach radial innen durchdringenden Kanal mit einer Evakuier-pumpe verbunden sind.

Natürlich ist anstelle der Ausbildung von Rillen auch die Verwendung einer größeren Zahl von Sacknegativen möglich, die dann vermittels eines entsprechend stärker verzweigten Kanalsystemes im Inneren der Trommel an eine Evakuierpumpe - vorzugsweise unter Zwischenschaltung eines puffernden Reservoirs - angeschlossen sind; entscheidend ist nur, dass der Abstand von Negativ zu Negativ über dem Trommelumfang klein genug ist im Verhältnis zur Biegesteifigkeit der Karkasse im Rohzustand, dass die Karkasse beim Zusammenfahren auf einen kleineren Trommeldurchmesser nicht infolge der Druckeigenspannungen ausbeult.

Die Rohlingsherstellung beginnt damit, dass die Trommel - vorzugsweise gleichmäßig über ihrer gesamten axialen Erstreckung - auf einen Durchmesser gebracht wird, von dem aus eine Durchmesserverkleinerung möglich ist und der im wesentlichen übereinstimmt mit dem Durchmesser, auf den die Trommel später am Ende des Kernsetzens wieder gebracht wird.

Dann wird die erste Schicht der Karkasse - je nach Aufbauweise ist das üblicher Weise eine Seitenwand links und eine Seitenwand rechts oder der Innenliner oder auch ein Verband aus diesen drei Einzelteilen aufgelegt. Dann werden die weiteren Karkassschichten, ggf. unter Einschluss einer weiteren Karkasslage, aufgelegt bis zur letzten Schicht vor dem Setzen der Wulstkerne. (Als Lage wird jede Schicht bezeichnet, die lange Festigkeitsträger - in der Regel Textilgarne oder Stahldrahtlitzen in Cordanordnung - enthält.)

Dann wird ein mindestens 30-%iges Vacuum in vorgenannten Negativen erzeugt. Bei einem Umgebungsdruck von 1 bar bedeutet ein mindestens 30-%iges Vacuum einen Minderdruck von mindestens 0,3 bar in den Negativen gegenüber der Umgebung, also einen absoluten Druck von höchstens 0,7 bar.

Durch diese Unterdruckerzeugung wird die Karkasse von der Trommelperipherie angesaugt und dadurch die Karkasse in ihrer Lage fixiert. - Man kann das Vacuum natürlich auch schon früher aufbauen, was aber insofern eine schlechtere Ausführung wäre, weil dann die Evakuierpumpe unnötig viel Betriebszeit und Energieverbrauch hätte.

Es versteht sich, dass bei einer besonders großen Anzahl saugender Negative der Minderdruck besonders schwach ausgebildet sein kann. Bei einer Anordnung von Gullys in zwei axial beabstandeten Umfangslinien und 6 Gullys pro Umfangslinie hat es sich bewährt, wenn 7 im wesentlichen axial verlaufende Rillen in jeden Gully münden. Schon mit einem 60-%igen Vacuum, welches sehr preiswert zu erreichen ist, werden bei solcher Negativanordnung hervorragende Ergebnisse erzielt.

Nachdem das beschriebene Vacuum erreicht ist und während es aufrecht erhalten wird, wird die Trommel auf einen kleineren Durchmesser, also radial, zusammen gefahren, und zwar so weit, dass die vorgefertigten Wulstkerne kontaktfrei über die mitsamt der Trommelperipherie radial kontraktierte Karkasse herüber gefördert werden können.

Wenn der links zu positionierende Wulstkern von links übergeschoben würde und der rechts zu positionierende Wulstkern von rechts über die Trommel geschoben würde dann würde es ausreichen, dass die Trommel nur in den beiden Bereichen der vorgesehenen Wulstkernposition und dem jeweils nach axial außen hin anschließenden Randbereich zusammen gefahren würde.

Weil es ein zu großer Aufwand wäre, die Trommel - die zu jeder Zeit zumindest von einer Stirnseite her auskragend gehalten sein muss (aber auch an beiden Seiten unterstützt gehalten sein könnte) - mal links und mal rechts, also mit einem Umgriff, zu halten, ist eine solche Verkürzung des Wulstkern-transportes über die Karkasse hinweg nur möglich, indem der Wulstkern, der von der Lagerseite der Trommel her auf die Karkasse aufgebracht werden soll, schon vor dem Auflegen der ersten Karkasslage über die Trommel transportiert wird in eine Wartestellung, welche sich noch näher am Trommellager befindet als der dem Trommellager zugewandte Rand der danach aufzulegenden Karkasslagen.

Zur Vermeidung eines solchen Aufwandes und zur Vermeidung weiterer Segmentunterteilungen der Trommel werden die erfindungsgemäßen Durchmesseränderungen der Trommel aber vorzugsweise über der gesamten axialen Erstreckung der Trommel ausgeführt, auch dann wenn - wie im Absatz zuvor erläutert - kein Wulstkern über den Mittelbereich der Karkasse hinweggefördert zu werden braucht.

Wie an sich bekannt, enthält die Trommel eine Vielzahl - zum Beispiel 24 - von im wesentlichen aus Metall, vorzugsweise aus Aluminium, bestehenden Segmenten. Diese Segmente sind üblicherweise über einen Mechanismus so miteinander gekoppelt, dass sie alle nur um das gleiche Maß in der Radialen verfahren können; keines der Segmente soll also einen anderen Weg ausführen können als die anderen Segmente, sodass bei allen eingestellten Trommelradien das Trommelzentrum unverändert bleibt.

Über diese Segmente aus Metall ist eine dickwandige, Hülle aus Gummi oder dergleichen gezogen. Diese Hülle bildet mit ihrer Außenseite die Trommelperipherie. In an sich bekannter Weise hat diese Hülle - unter anderem - die Funktion, die beim radialen Ausfahren der Segmente unvermeidlicherweise entstehenden schmalen Spalte zu überbrücken, sodass die Trommelperipherie auch bei ausgefahrenen Segmenten im wesentlichen kreisrund ist. Die Wandstärke dieser Hülle ist in Abhängigkeit von der Weite des maximal zu überbrückenden Spaltes, der Härte des verwendeten Materiales für die Hülle und der Schärfe der Forderung nach beulenfreier Innenkontur der rohen Karkasse zu bemessen; eine bewährte Wandstärke liegt bei 2 cm.

Gemäß der Erfindung sind auf der Außenseite dieser Hülle (auch als Manschette bezeichnet) die bereits genannten und für die Durchführung des Verfahrens wichtigen saugenden Negative angeordnet, die die Karkasse auf dieser Hülle fixieren.

Die Trommel sollte noch weiter zusammenfahrbar sein als für die Heranförderung und Positionierung der vorgefertigten Wulstkerne nötig, damit die Hülle auf den Segmenten in diesem noch weiter zusammengefahrenen Zustande montierbar ist. - Die Trommel ist bei Förderung und Positionierung der Wulstkerne weniger weit zusammengefahren, hat also einen größeren Durchmesser, als während des Aufziehens der Hülle, damit die Hülle während der Wulstkernbeförderung noch unter soviel Eigenspannung infolge ihrer elastischen Dehnung steht, dass sie auch bei Kontraktierung der Karkasse in Kontakt zu den radial innen angeordneten Segmenten bleibt. - Anderenfalls müsste die Hülle auf den Segmenten so befestigt werden, dass die Hülle von den Segmenten nicht abheben kann; dies könnte durch Festkleben oder Festschrauben geschehen. Um den - notwendigen - Kontakt zwischen Hülle und Segment sicher zu stellen, wäre es ferner möglich, saugende Negative auch auf der Innenseite der Hülle anzuordnen.

In dem wie zuvor beschrieben ausreichend zusammengefahrenen Zustande der Trommel und der damit faltenfrei anliegend radial kontraktierten Karkasse infolge des Vacuums werden sodann die Wulstkerne über die Trommel bis an ihre richtige Position gebracht. Dabei wird jede Berührung - wie an sich bekannt - zwischen der Trommelperipherie und der Innenseite der Wulstkerne vermieden.

Danach wird die Trommel wieder expandiert und zwar vorzugsweise auf einen Durchmesser, der im wesentlichen mit dem Durchmesser übereinstimmt, auf dem die Karkasse ursprünglich aufgebaut wurde. - Dies hat folgende wichtige und neue Wirkung: In diesem gegen die Wulstkerne gepressten Zustande ist die - infolge ihrer Rohheit gegen Eigenspannungen noch besonders empfindliche - Karkasse im wesentlichen spannungsfrei, zumindest deutlich spannungsärmer als bei der bekannten Lösung, wo die Karkasse vor dem Anheften an die Wulstkerne eigenspannungsfrei ist, aber nicht mehr danach.

Die Durchmesseränderung der Trommel ist so auf den Innendurchmesser des Wulkstkernes abgestimmt, dass bei dieser Trommelexpansion die vorgefertigten Wulstkerne und die noch flach liegende Karkasse in der zur Haftungsherstellung erforderlichen Stärke radial gegeneinander gepresst werden.

Danach wird die Trommel wieder auf einen kleineren Durchmesser zusammengefahren und die Karkasse samt gesetzter Wulstkerne von der Trommel abgezogen, um sie zu einer Bombiereinrichtung zu befördern.

Der Erfindung liegt die Erkenntnis zugrunde, dass die Karkasse - während ihres Transportes zur Bombiervorrichtung und während ihres Verharrens auf der Bombiervorrichtung bis zur Bombierung - der Schwerkraft folgend nach unten durchhängt. Dieser Effekt zeigt sich bei den heute weit überwiegend verwendeten Radialkarkassen, auf die sich diese Erfindung bezieht, infolge der im wesentlichen axial verlaufenden Festigkeitsträger. Im axial mittleren Bereich befindet sich die Karkasse also im oberen Bereich näher an der Rotationsachse als auf der Unterseite.

Dieses schwerkraftbedingte Durchhängen bedingt einen systematischen Fehlermechanismus bei der bisherigen Verfahrensweise; um diesen zu verstehen, haben die Erfinder zunächst das Verhalten der Karkasse unter der Annahme theoretisch beschrieben, dass die Reifenfertigung in der Schwerelosigkeit erfolgen würde und sonstige zufällige Fehler ausgeschlossen wären, und danach die Auswirkungen der eben doch angreifenden Schwerkraft theoretisch analysiert, also eine verschiedene Kausalitäten unterscheidende Hypothese aufgestellt.

Beim Transport der mit den Wulstkernen zusammengefügten Karkasse von der Aufbautrommel zur Bombiervorrichtung wird - aufgrund der im Wulstbereich vorgenommenen Karkassen-Aufweitung auf den Wulstkerninnendurchmesser - eine Rückstellkraft im gedehnten Kautschuk frei, weil nun die ehedem auweitende Kraft der Aufbautrommel fehlt. Der Karkassen-Aufweitung stellt sich eine in Umfangsrichtung verlaufende Zugspannung im Kautschuk entgegen, die durch dessen zuvorige Dehnung provoziert ist. Diese Zugspannung im Kautschuk wirkt korsettartig, also einschnürend.

Dieser Effekt lässt sich auch als "rückstellend" titulieren, versucht er doch, wo möglich (also zwischen den Wulstkernen, denn unter den Wulstkernen ist es durch die erzielte Anhaftung unmöglich) die Karkasse in die Form zu bringen, die sie vor der - unterhalb der Wulstkerne aufgezwungenen - Spreizung innehatte. Im Ergebnis dieses Effektes verlaufen in diesem Verfahrensstadium die Festigkeitsträger der Karkasse - üblicherweise dünne Stahlseile bei LKW-Reifen, natürliche und/oder chemisch erzeugte Textilgarne bei Fahrrad-, Motorrad- und PKW-Reifen - U-förmig zwischen den Wulstkernen, wobei deren Abstandsminimum zur Rotationsachse jeweils in der Mitte zwischen beiden Wulstkernen liegt. Die Senke aller Festigkeitsträger weist also zur Rotationsachse hin.

Nun wird die oben theoretisch hergeleitete Form der Karkasse der realiter wirkenden Schwerkraft ausgesetzt, wobei die Rotationsachse der Aufbautrommel - wie üblich - waagerecht im Raum liege: Auch die Schwerkraft provoziert ein Durchhängen der Festigkeitsträger, und zwar für alle Festigkeitsträger nach unten; die hierdurch verursachte Senke weist also nur für den obersten Festigkeitsträger ebenfalls zur Rotationsachse hin, für den als zweites Beispiel herausgegriffenen untersten hingegen von der Rotationsachse weg.

In der oberen Trommelhälfte, am stärksten ganz oben, wirken also beide Festigkeitsträgerverformungen sich verstärkend zusammen, in der unteren Trommelhälfte hingegen, am stärksten ganz unten, wirken beide Verformungen sich vermindernd zusammen. Könnten sich die Wulstkerne frei zueinander einstellen, so würden sie eine Taumellage zueinander einnehmen, und zwar eine solche, wo die Wulstkerne oben einen kleineren Abstand voneinander aufweisen als unten.

Die Schwerkraft wirkt aber auch auf die - relativ schweren - Wulstkerne. Infolgedessen widersetzen sie sich vorgenannter Taumellage und nehmen beide während des Transportes eine praktisch senkrechte und damit praktisch koaxiale Lage zueinander ein. Als Reaktion hierauf entsteht in den Festigkeitsträgern der oberen Trommelhälfte, am stärksten ganz oben, eine stärkere Zugspannung als in den Festigkeitsträgern der unteren Trommelhälfte, am schwächsten ganz unten.

Da der Kautschuk, dessen Elastizität für den rücktreibenden Effekt entscheidend ist, noch nicht vulkanisiert ist, zeigt er neben seiner Elastizität noch eine deutliche Plastizität. Dies hat zwei Wirkungen: Zum einen wird der rückstellende Effekt über der Zeit schwächer und zum anderen gibt die Verankerung der Festigkeitsträger, insoweit sie unter Zug stehen, am Wulstkern mit der Zeit nach, weil diese Verankerung nichts anderes ist als eine Verklebung mittels des zwischen Kern und Festigkeitsträger befindlichen - auch dort fließfähigen - . Kautschukes, der auf Schub belastet wird. Bei letztgenanntem "Nachgeben" wird ein unter Zug stehender Festigkeitsträger allmählich unter dem Wulstkern durchgezogen und zwar umso schneller, desto heftiger der Festigkeiträgerzug ist.

Egal wann der beschriebene Fließprozess unter dem Kern durch den weiteren Reifenaufbau und schließlich die Vulkanisation abgebrochen wird, bis dahin hat sich der Effekt eingestellt, dass die Festigkeitsträger der oberen Reifenhälfte um einen größeren Betrag unter dem Kern durchgezogen wurden - was zuvor fälschlicherweise für eine größere Dehnung des Festigkeitsträgers gehalten wurde - als die der unteren. Also ist auch am so gefertigten Endprodukt Reifen an der ehedem oberen Stelle eine größere Festigkeitsträgerlänge von Kern zu Kern zu beklagen und damit ein größerer Abrollradius als an der ehedem unteren Stelle.

Der vormals auf der Lager- und Fördervorrichtung von der Aufbautrommel zum Bombierkopf unten befindliche Teil des Reifens zeigt also ein Radialkraftminimum, der ehemals auf der Bombiervorrichtung oben befindliche Teil des Reifens zeigt ein Radialkraftmaximum. Der Radialkraftschrieb zeigt in der Fourier-Analyse gemäß der Erkenntnis der Erfinder eine erste Harmonische eben nicht nur in unreproduzierbarer Zufälligkeit sondern in systematischer Korrelation zur Positionierung des Rohlinges auf der Fördervorrichtung. Diesen Zusammenhang haben die Erfinder aufgedeckt und wie oben dargestellt analysiert.

Eine wichtige Hürde im aufgezeigten Weg der Erkenntnis war, die alte Idee zu verlassen, dass die Festigkeitsträger oben und unten unterschiedlich gedehnt würden. Diese alte Idee konnte erst dadurch widerlegt werden, dass die Umschlaglängen analysiert wurden, wobei zutage trat, dass dort, wo die Festigkeitsträger zwischen den Kernen scheinbar gedehnt waren, die Umschlaglängen am fertigen Produkt etwas kürzer waren.

Aber auch diese Analyse führte noch nicht direkt zur Lösung, denn schließlich ist die Schwerkraft nicht ausschaltbar.

Der aufgedeckten Kausalität entlang gehend erschien es zunächst vielversprechend, die Aufbautrommel und die Bombiervorrichtung mit senkrechter statt waagerechter Roatationsachse vorzusehen, sodass die Karkassrohlinge mit senkrechter Anordnung der Rotationsachse hätten gefördert und ggf. zwischengespeichert werden können. Diese Idee musste aber verworfen werden, weil der vorangehende Karkassaufbau genauso wie der nachfolgende Gürtelaufbau nur mit der hergebrachten waagerechten Anordnung der Rotationsachse der deren Aufbau dienenden Trommeln - wegen ansonsten schwieriger Zufuhr der diversen aufzulegenden Streifen - praktikabel erscheint.

Ferner dürfte zumindest auf der Rohlingsseite, die sich während des erwogenen und verworfenen senkrechten Aufbaues oben befände, nicht bereits eine Seitenwand - das heißt ein festigkeitsträgerfreier Kautschukstreifen zur seitlichen Abdeckung der Karkasslage - angeheftet sein, weil diese dann unkontrolliert auf die Karkasslage fallen könnte. - Dieser Ansatz, den systematischen Fehlereinfluss der Schwerkraft auf den Rundlauf herzustellender Reifen auszuschalten, führt also zu keiner günstigen Lösung.

Der Kern der Erfindung liegt vielmehr darin, den Rückstelleffekt weitgehend auszuschalten, indem erstens die Karkasse im wesentlichen nur unterhalb der Wulstkerne einem Zwang ausgesetzt wird und nicht auch einem nachwirkenden zwischen den Wulstkernen, das zweitens die Zeit, währenddessen dieser Zwang - bei der Erfindung eine Stauchung und keine Dehnung - aufrecht erhalten wird, stark verkleinert und zudem nicht schwankend ist und, dass drittens besagter Zwang beseitigt ist bevor die Karkasse freigegeben wird von der Aufbautrommel durch deren Zusammenfahren. Dieses aufeinander Bezug nehmende Bündel erfindungsgemäßer Verfahrensweise hat zu einer deutlichen Verbesserung der damit gefertigten Reifen in der Rundlaufprüfung geführt.

Vorzugsweise erfolgt das erfindungsgemäße faltenfreie Zusammenstauchen der Karkasse zum Überschieben und Positionieren der Wulstkerne erst unmittelbar vor dem Überschieben und Positionieren und das anschließende Dehnen zurück mittels Trommelexpansion auf den im folgenden als D5 bezeichneten Durchmesser unmittelbar nach dem Positionieren. Dabei ist vorzugsweise D5 gleich dem im folgenden als D3 bezeichneten Trommel-Durchmesser, auf dem die Karkasse zu Beginn aufgebaut wurde. Dabei ist der erwünschte Effekt, dass nämlich die empfindliche Eigensteifigkeit der noch rohen Karkasse weniger gestört wird, am größten; es tritt praktisch überhaupt keine Störung mehr ein.

Infolge dieser Störungsverminderung - die noch weiter reduziert wird, wenn die Zeitspanne zwischen dem Abziehen der Karkasse von der Aufbautrommel und dem Bombieren sehr kurz gewählt wird, besonders bevorzugt unter 30 Sekunden - ist das Durchhängen der Karkasse während des Transportes zur Bombiervorrichtung, die auch als Bombierkopf bezeichnet wird, und während des noch ungeblähten Verharrens auf der Bombieryorrichtung waagerechter Rotationsachse stark vermindert; die Karkasse verhält sich steifer. Deswegen legt sich der Bombierbalg an die Innenseite der zu blähenden (= zu bombierenden) Karkasse oben und unten praktisch gleichzeitig. Der verbleibende systematische Fehler durch den Schwerkrafteinfluss ist deutlich kleiner als die zufälligen Fehler.

In ihrer besten Ausführung erreicht also die Erfindung, dass die empfindliche Karkasse zum Aufbau der erforderlichen Pressung zwischen den Wulstkernen und der Karkasse beim Abschluss des Kernsetzens nicht gegenüber ihrem spannungsfreien Aufbaudurchmesser gedehnt wird, sondern sozusagen entstaucht wird, also von ihrer zwischenzeitlichen, kurzzeitigen Druckeigenspannung befreit wird, einen im wesentlichen spannungsfreien Zustand erreichend.

Eine grosse Verbesserung in den Rundlaufeigenschaften ist unabhängig davon zu beobachten, ob die Vulkanisation mit oder ohne Balg erfolgt; weil zumindest die langwelligen zufälligen Fehler beim balglosen Vulkanisieren kleiner zu sein scheinen, ergibt sich tendenziell ein noch besserer Rundlauf bei der balglosen Vulkanisation.

Eine notwendige Voraussetzung zur Durchführung eines erfindungsgemäßen Verfahrens ist eine solche Anheftung der kurzzeitig zu stauchenden Karkasse an die Trommelperipherie, dass diese nicht ausbeulen oder Falten werfen kann. - Für die Reifen schwerer Nutzfahrzeuge, mit ihrer Stahlseil-Karkasse war eine magnetische Fixierung zu erwägen. Mit Rücksicht auf die Kosten und die Betriebssicherheit, auch mit Rücksicht auf den Personenschutz, ist die grundsätzlich mögliche magnetische Fixierung aber deutlich schlechter als die gefundene Lösung durch Ansaugen der Karkasse.

Für diese Lösung empfiehlt sich die Herstellung und Verwendung einer expandierbaren Trommel, die - wie an sich bekannt - eine Hülle aus Gummi oder dergleichen aufweist und deren Außenseite die Trommelperipherie bildet. Gemäß dieser Vorrichtungserfindung soll die besagte Hülle der Trommel auf ihrer Außenseite Negative aufweisen.

Um nicht etwa von außen einen Überdruck aufbauen zu müssen, was ein grösseres Volumen beaufschlagen müsste und größere Dichtigkeitsprobleme brächte, wird vorzugsweise von innen her ein Unterdruck aufgebaut. Dazu sollten gemäß Anspruch 5 die Negative der Trommel mit einer Evakuierpumpe in Verbindung stehen.

Die Erfindung wird nachfolgend anhand einigen Figuren näher erläutert; es zeigt:
- Fig. 1: eine Ansicht auf die obere Hälfte einer erfindungsgemäßen Aufbautrommel im weitestmöglich zusammengefahrenen Zustande während des Aufziehens einer zugehörigen Gummihülle auf die Aufbautrommel,
- Fig. 2: eine Ansicht auf die obere Hälfte der gleichen Aufbautrommel nach Abschluss des Aufziehens der zugehörigen Gummihülle und gespreizt auf einen Durchmesser D2,
- Fig. 3: eine Ansicht auf die obere Hälfte der gleichen Aufbautrommel gespreizt auf einen Durchmesser D3, auf dem gemäß der Erfindung der Aufbau der Karkasse beginnen soll,
- Fig. 4: eine Ansicht wie Figur 3, jedoch nach dem Auflegen der im Schnitt gezeigten zuerst aufgelegten Reifenbauteile, nämlich der Seitenwände, des Innenliners aus einer Butylkautschukmischung, des Chafers im zukünftigen Wulstbereich, der Karkasslage und der Schulterfüllprofile,
- Fig. 5: eine Ansicht wie Figur 4, jedoch nach dem für die Erfindung typischen Zusammenfahren auf einen kleineren Durchmesser (D4=D2),
- Fig. 6: eine Ansicht wie Figur 5, jedoch nach dem axialen Positionieren der Wulstkerne,
- Fig. 7: eine Ansicht wie Figur 6, jedoch nach dem Spreizem der Trommel auf einen größeren Durchmesser (D5=D3) zur Anheftung der Wulstkerne,
- Fig. 8: eine Ansicht wie Figur 7, jedoch nach dem Zusammenfahren auf einen kleineren Durchmesser (D6=D2) und
- Fig. 9: eine Ansicht wie Figur 8, jedoch während des Abziehens der bis dahin komplettierten Karkasse.

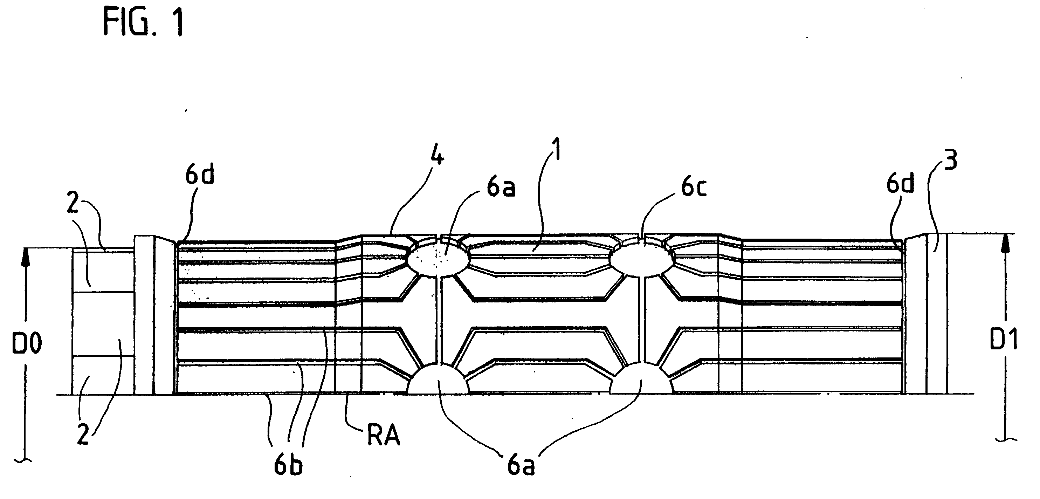

**Figur 1** zeigt eine Ansicht auf die obere Hälfte einer erfindungsgemäßen Aufbautrommel 1 mit zwölf Metallsegmenten 2 im weitestmöglich zusammengefahrenen Zustande während des Aufziehens einer zugehörigen Gummihülle 3 auf die Aufbautrommel 1. In diesem Beispiel ist davon ausgegangen, dass die - nicht dargestellte - Trommellagerung auf der linken Seite angeordnet ist, weshalb die Gummihülle 3 von rechts nach links aufgezogen wird.

Weil die waagerecht angeordnete Rotationsachse RA gleichzeitig auch eine Symmetrieachse ist, braucht die untere Hälfte nicht gezeigt zu werden.

Der über den Metallsegmenten 2 der Aufbautrommel 1 hierbei zu messende Durchmesser laute D0. Der Außendurchmesser der Hülle 3 laute im hier gezeigten ungedehnten Zustande D1; zur Erreichung eines kleinen Spieles zwischen Hülle 3 und den Metallsegmenten 2, welches das Aufziehen der Hülle 3 erleichtert, ist D1 vorzugsweise etwas größer als D0 plus dem Doppelten der Hüllenwandstärke.

Die Hülle 3 zeigt auf ihrer Außenkontur ein System von Negativen 6. In diesem Ausführungsbeispiel sind in zwei Umfangsspuren je 6 "Gullys" 6a angeordnet, an die je zehn im wesentlichen axial verlaufende Rillen 6b und zwei in Umfangsrichtung verlaufende Rillen 6c zwischen je zwei Gullys 6a angeschlossen sind. An beiden axial äußeren Rändern sind alle axial verlaufenden Rillen 6b durch je eine in Umfangsrichtung verlaufende Rille 6d miteinander verbunden. So ist ein dichtes Netz von Negativen 6 auf der gesamten Trommelperipherie 4 gegeben. Dieses Netz von Negativen dient in einem späteren Verfahrensstadium dem Ansaugen der Karkasse.

Die Negative 6 haben zweckmäßigerweise eine hier maßstäblich wiedergegebene Breite und Tiefe von etwa 3 % des Trommeldurchmessers; sind die Nuten deutlich geringer in ihrer Querschnittfläche bemessen, so ergibt sich keine ausreichende Ansaugwirkung. Nur die Gullys 6a sind der übersichtlicheren Darstellbarkeit halber übertrieben groß gezeigt; ansonsten ist diese Figur - wie die folgenden - im Rahmen der Zeichengenauigkeit maßstabsgerecht.

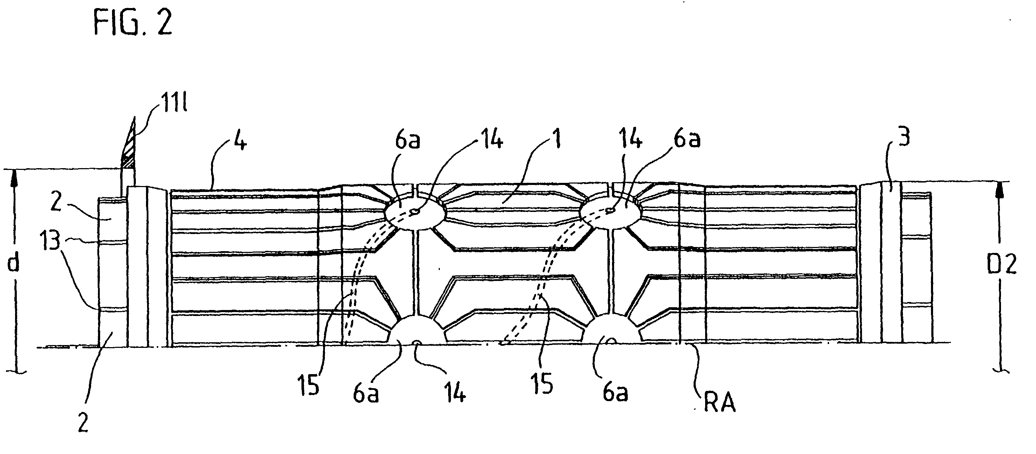

**Figur 2** zeigt eine Ansicht auf die obere Hälfte der gleichen Aufbautrommel 1 nach Abschluss des Aufziehens der zugehörigen Gummihülle 3 und gespreizt auf einen Durchmesser D2. Die Gummihülle 3 ist nun ein wesentlicher funktioneller Bestandteil der Aufbautrommel 1: Die äußere Oberfläche der Gummihülle 3 bildet zugleich die Peripherie 4 der Trommel 1. Die Hülle 3 überbrückt die infolge der Spreizung sich auftuenden Spalten 13 zwischen den Metallsegmenten 2 der Trommel 1.

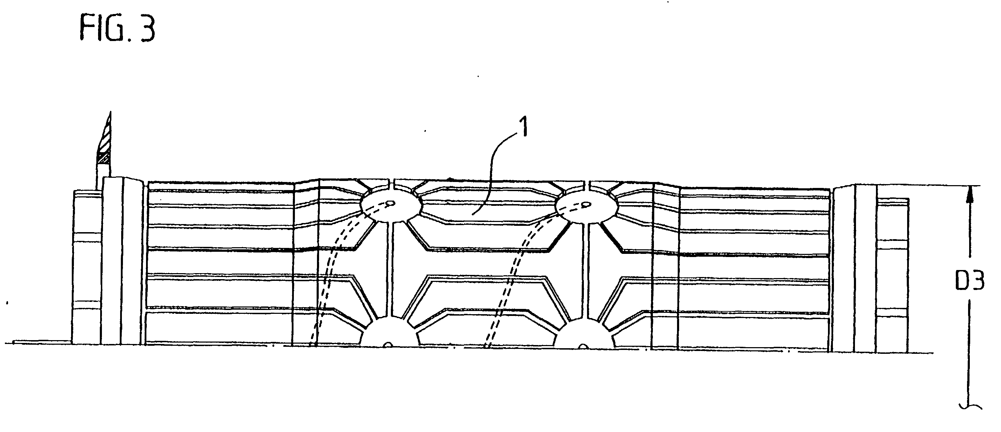

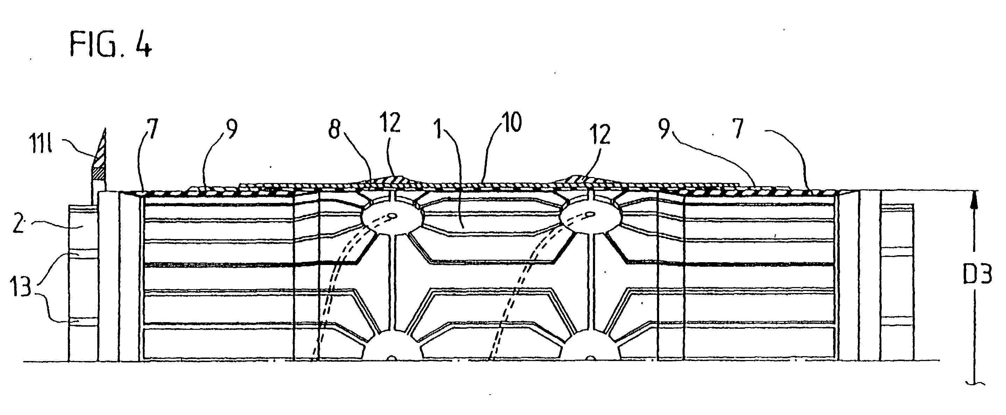

Durch die Vorspannung, die durch die Aufdehnung der Hülle 3 von D1 auf D2 erzielt ist, hebt die Hülle 3 auch dann nicht von den darunter befindlichen Metallsegmenten 2 der Trommel 1 ab, wenn auf diese eine nach radial außen gerichtete Kraft wirkt; dies ist wesentlicher Sinn der reltiv großen Durchmesserdifferenz von D1 nach D2. Der - auf welche Weise auch immer erreichte - zumindest weitgehende Ausschluss des Abhebens der Hülle ist eine der Voraussetzungen dafür, dass die Hülle 3 im späteren Verlauf des erfindungsgemäßen Verfahrens überhaupt die Karkasse - selbige in Umfangsrichtung stauchend - auf einen Durchmesser D4 bringen kann, welcher kleiner ist als der in den Figuren 3 und 4 gezeigte Aufbaudurchmesser D3 und vorzugsweise mit D2 übereinstimmt.

Die Hülle 3 ist nicht nur axial positioniert sondern auch in ihrer Umfangsrichtung, und zwar so, dass sich unterhalb eines jeden Gullys 6a, der die Hülle 3 nach radial innen hin durchdringt, eine Anschlussbohrung 14 (auch "Durchlassöffnung" 14 genannt) im betreffenden Metallsegment 2 befindet. Jede dieser Anschlussbohrungen 14 steht - vorzugsweise über flexible Schlauchleitungen 15 - mit einer Evakuierpumpe 5 (vorzugsweise einer gemeinsamen) in Verbindung. Für diese Ausführung müssen sich also in jedem zweiten der Metall segmente 2 zwei solcher Anschlussbohrungen 14 befinden in einem axialen Abstande zueinander entsprechend dem axialen Gullyabstande.

Während der Produktion einer Reifenserie ist der hier gezeigte Trommeldurchmesser D2 der kleinste je angefahrene Durchmesser; der Durchmesser D1 wird nur zu Kontroll- und Reparaturzwecken angefahren.

Es empfiehlt sich, als erstes den in der Nähe der Trommellagerung - hier also links - zu setzenden Wulstkern 111 bereits jetzt von rechts so weit nach links überzuziehen, dass er eine Zwischenspeicherstellung zwischen dem - hier rechten - Rand der (wie gesagt nicht dargestellten) Trommellagerung und dem - hier linken - Rand der aufzubauenden Karkasse findet; darum ist er hier auch dargestellt.

**Figur 3** zeigt eine Ansicht auf die obere Hälfte der gleichen Aufbautrommel 1 gespreizt auf einen Durchmesser D3, auf dem gemäß der Erfindung der Aufbau der Karkasse beginnen soll.

Der Aufbau - der fachmännisch als Konfektion bezeichnet wird - des Reifenrohlinges beginnt bei der bevorzugten und hier gezeigten Variante des erfindungsgemäßen Verfahrens mit dem Auflegen der Seitenwände 7.

**Figur 4** zeigt eine Ansicht wie Figur 3, jedoch nach dem Auflegen der ersten Reifenbauteile, in diesem Ausführungsbeispiel beginnend mit den besagten Seitenwänden 7. Diese Kautschukstreifen 7 haben einen im wesentlichen trapezförmigen Querschnitt.

Als "Seitenwände" 7 werden in diesem Zusammenhange die Streifen 7 bezeichnet, die die der Luftkaverne gegenüber liegende Seite der Karkasslage 10 in den Bereichen zwischen den Wülsten und dem Laufstreifen abdecken. Der hier verwendete Sprachgebrauch der Fertigungstechniker unterscheidet sich also ein wenig von dem Sprachgebrauch vieler Konstrukteure, die den gesamten Reifenbereich zwischen Wulst und Kronenbereich - also inklusive des entsprechenden Bereiches der Karkasslage 10 - als Seitenwand bezeichnen.

Wie in den folgenden Figuren auch, ist bzw. sind alle aufgelegten Reifenteile im Querschnitt dargestellt; die Aufbautrommel hingegen ist, wie in den Figuren zuvor auch, in Ansicht dargestellt analog der üblichen Darstellungsweise einer ungeschnittenen Schraube innerhalb eines geschnittenen Innengewindes.

Nach den Seitenwänden 7 wurde - wie Figur 4 überdies zeigt - der Innenliner 8 aus einer Butylkautschukmischung und der Chafer 9 im zukünftigen Wulstbereich aufgelegt; natürlich könnten auch mehrere Chafer verwendet werden.

Anschließend wurde die Karkasslage 10 aufgelegt. Für PKW-Reifen enthält sie üblicherweise textile Festigkeitsträger, für LKW-Reifen Seile aus Stahldraht und zwar jeweils in etwa axialer Cordlage, das heißt in paralleler Ausrichtung aller Festigkeitsträger zueinander ohne kreuzende Festigkeitsträger, wobei die Festigkeitsträger zumindest in etwa axial verlaufen.

Danach wurden die Schulterfüllprofile 12 aufgebracht, die im fertigen Reifen die Funktion haben, eine - auch an den Rändern - flache Gürtelquerkontur mit einer an den Gürtelrändern bereits stärker gewölbten Karkassenkontur in Einklang zu bringen.

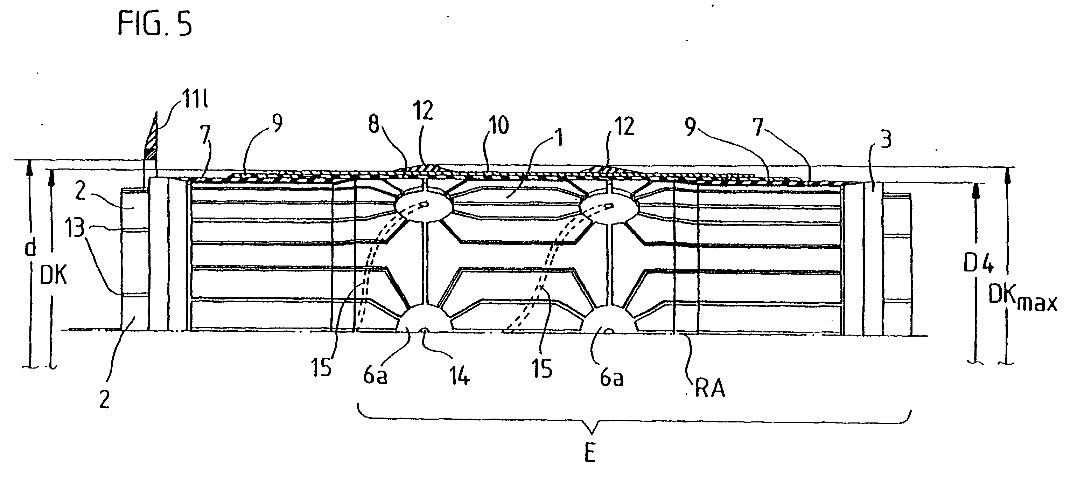

**Figur 5** zeigt eine Ansicht wie Figur 4, jedoch nach dem für diese Erfindung entscheidenden Zusammenfahren der Trommel 1 auf einen kleineren Durchmesser D4 als Vorbereitung für das Kernsetzen. Dabei ist vorzugsweise - wie dargestellt - der Durchmesser D4 gleich dem Durchmesser D2, wie er in Figur 2 gezeigt wurde. Die Karkasse folgt diesem Zusammenfahren durch die Vacuum-Anwendung.

Über den Schulterfüllprofilen 12 hat die bislang aufgebaute und nun auf einen kleineren Innendurchmesser D4 gesaugte Karkasse ihren größten Durchmesser DKₘₐₓ. Falls nicht der linke Wulstkern 111 bereits zu Anfang übergezogen wurde, so muss der Durchmesser D4 der Trommel 1 für das nachfolgende Kernsetzen so viel kleiner sein, dass DKₘₐₓ kleiner dem Innendurchmesser d der Wulstkerne 11 wird, sodass der linke Wulstkern 111 auch diese Schulterfüllprofile 12 noch berührungsfrei passieren kann.

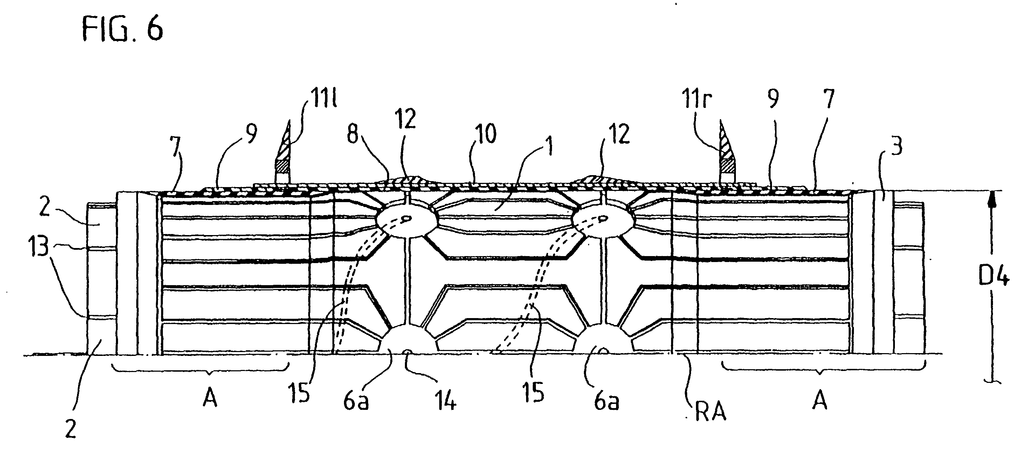

Wurde der linke Wulstkern 111 hingegen vorher übergezogen, wie empfohlen und in dieser Figurenfolge gezeigt, so ist nicht die größere axiale Erstreckung E der Trommel 1 vor dem Setzen der Wulstkerne 11 von diesen - insbesondere dem linken 111 - zu überstreichen sondern nur die kleineren, in der späteren Figur 6 mit A bezeichneten Trommelbereiche; weil die Schulterfüllprofile 12 mit ihrem maximalen Durchmesser DKₘₐₓ außerhalb der dann noch zu überstreichenden Trommelbereiche A liegen, also nur noch der - kleinere - maximale Karkass-Durchmesser DK in den Bereichen A interessiert, braucht die Differenz zwischen D3 und D4 nicht ganz so groß zu sein; die Karkasse kann also auf einem kleineren Durchmesser D3 aufgebaut werden.

Letzteres hat den Vorteil, dass die zu überbrückenden Spalte 13 zwischen den metallischen Segmenten 2 nicht so groß werden. Ferner hat ein im Verhältnis zu D3 großes D4 (und damit D2) den Vorteil, dass eine etwas engere Stellung der Festigkeitsträger unterhalb der - nachfolgend gesetzten - Wulstkerne 11 gewählt werden kann, ohne dass die Festigkeitsträger in der Reifenumfangsrichtung zusammengestaucht werden, was insbesondere bei metallischen Festigkeitsträgern vermieden werden sollte.

**Figur 6** zeigt eine Ansicht wie Figur 5, jedoch nach dem axial richtigen Positionieren, also dem ersten Teil des Kernsetzens. Dazu sind die Kerne nach axial innen verschoben. Um nicht vom wesentlichen abzulenken, sind die konventionell aufgebauten, verschiebbaren Haltevorrichtungen für die Kerne in der gesamten Figurenfolge nicht dargestellt.

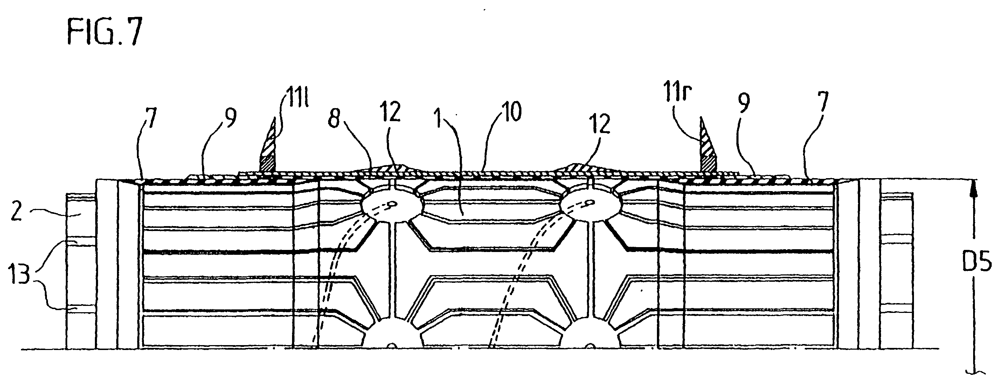

**Figur 7** zeigt eine Ansicht wie Figur 6, jedoch nach dem Spreizen der Aufbautrommel 1 auf einen Durchmesser D5, der so groß ist, dass eine zur Erzielung ausreichender Haftung zwischen der Karkasslage 10 und den Wulstkernen 11 genügende Pressung aufgebaut wird. Vorzugsweise sind - wie hier dargestellt - die Fertigungsvorrichtung und die eingesetzten Halbzeuge so aufeinander abgestimmt, dass D5=D3.

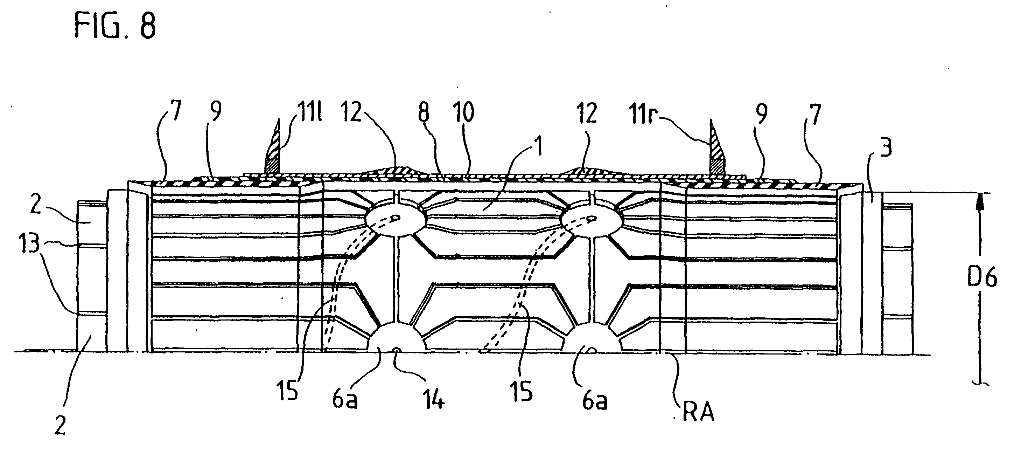

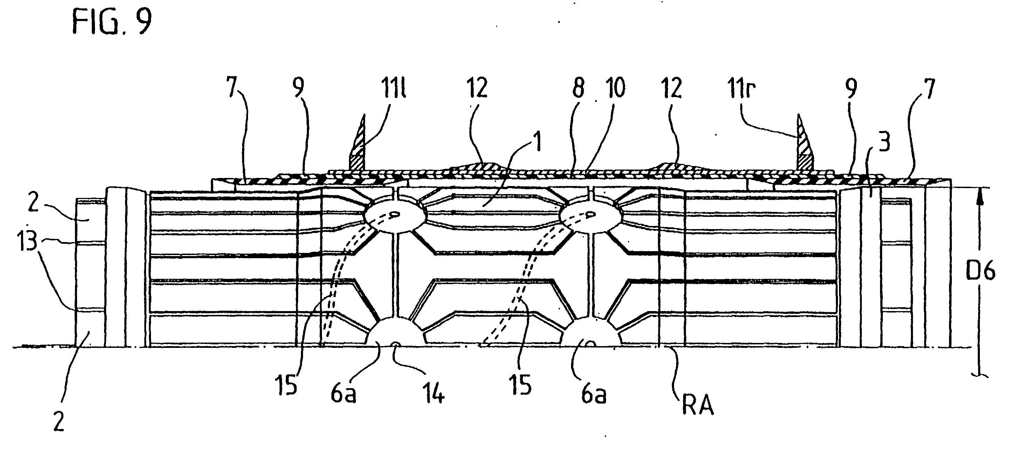

**Figur 8** zeigt zeigt eine Ansicht wie Figur 7, jedoch nach dem Zusammenfahren der Aufbautrommel 1 auf den kleineren Durchmesser D6. Vorzugsweise ist D6 - wie hier dargestellt - gleich D2. In dieser engen Stellung der Trommel kann die bis dahin komplettierte Karkasse von der Trommel nach rechts abgezogen werden, wie dies **Fig. 9** zeigt. Nach Abzug der bis hierhin gefertigten Karkasse kann auf der Trommel 1 bereits der Aufbau der nächsten Karkasse beginnen.

Danach wird die halbfertige Karkasse in an sich bekannter Weise zur Bombiervorrichtung befördert, wo die nach axial außen über die Wulstkerne 11 überstehenden Ränder 10.1 der Karkasslage 10 nach radial außen umgebuckt werden und vorzugsweise gleichzeitig der Karkassenbereich zwischen den Wulstkernen ebenfalls nach radial außen gedehnt wird. Dabei bildet sich in an sich bekannter Weise eine feste Galgenschlinge, die der Karkasslage 10 später im fertigen Reifen eine sichere Verankerung gegenüber den Wulstkernen 11 bietet.

Weil die Karkassenbehandlung auf der Bombiervorrichtung wie auch das weitere Verfahren zur Herstellung eines Reifenrohlinges, also das Aufbringen der Gürtellagen, ggf. einer Bandage, und des Laufstreifens bevorzugt in an sich bekannter Weise erfolgt, ist hierauf genausowenig eine weitere Figur gerichtet wie auf die die Reifenherstellung abschließende Vulkanisation in einer das Laufflächenprofil einprägenden Vulkanisationspresse.

Der wesentliche Vorteil des erfindungsgemäßen Verfahrens ist, dass die halbfertige Karkasse während ihres Transportes von der Aufbautrommel zur Bombiervorrichtung und ihrer ggf. erforderlichen Zwischenspeicherung völlig eigenspannungsfrei vorliegt, was präzisionsmindernden Spannungsausgleich durch Kriechbewegungen auf ein Minimum reduziert. Dies wird dadurch erreicht, dass der Durchmesser (D5), auf den die Karkasse beim Anheften an die Innenseite der Wulstkerne gebracht wird, zumindest im wesentlichen - vorzugsweise exakt - gleich dem Durchmesser (D3) ist, auf dem sie aufgebaut wurde. Um die Wulstkerne zwischenzeitlich axial positionieren zu können wird die Karkasse durch Zusammenfahren der Aufbautrommel und Vacuum-Anwendung auf einen kleineren Durchmesser (D4) geschrumpft. Im Ergebnis zeigen Reifen mit so gefertigten Karkassen hervorragende Rundlaufwerte.

Die folgende Bezugszeichenliste ist Bestandteil der Beschreibung.

### Bezugszeichenliste

- 1: Trommel
- 2: Metallsegmente der Trommel 1
- 3: Hülle der Trommel 1
- 4: Trommelperipherie
- 5: Evakuierpumpe
- 6: Negative in der Trommel hülle 3
6a Gullvs
6b im wesentlichen quer verlaufende Negative
6c : in Umfangsrichtung verlaufende Negative von Gully zu Gully
6d in Umfangsrichtung verlaufende Negative an den Rändern
- 7: Seitenwand
- 8: Innenliner
- 9: Chafer
- 10: Karkasslage
10.1 axial außerhalb der Wulstkerne 11 überstehende Ränder 10.1 der Karkasslage 10
- 11: Wulstkerne
11l linker Wulstkern
11r rechter Wulstkern
- 12: Schulterfüllprofile
- 13: Spalten zwischen den Segmenten 2 im gespreizten Trommel zustande
- 14: Durchlassöffnung (auch Anschlussbohrung genannt) in den Segmenten 2 zur Absaugung
- 15: Schlauchleitungen zur Verbindung der Anschlussbohrungen 14 mit der Evakuierpumpe 5

- d: Innendurchmesser der Wulstkerne 11
- A: der axiale Trommelbereich, der von den Kernen 11 bei deren Positionierung überstrichen wird

- D0: kleinstmöglicher Durchmesser der Aufbautrommel 1, gemessen über ihren Metallsegmenten 2 (zur Montage der Hülle 3)
- D1: ungedehnter Außendurchmesser der Hülle 3 (während der Montage der Hülle 3)
- D2: (D2>D1) kleinster während des Verfahrens eingestellter Durchmesser der Trommel 1 im Bereich A (zur Förderung und Positionierung der Wulstkerne)
- D3: (D3>D2) Durchmesser der Trommel 1 auf dem die Karkasse erfindungsgemäß bis zum Setzen der Kerne 11 aufgebaut wird
- D4: Durchmesser auf den die Trommel 1 danach und für das Setzen der Wulstkerne 11 zusammengefahren wird, vorzugsweise D4=D2
- D5: Durchmesser auf den die Trommel 1 danach für das Anheften der Wulstkerne 11 durch Pressung auseinandergefahren - also gespreizt - wird, vorzugsweise D5=D3
- D6: Durchmesser der Trommel 1 zum Abziehen der Karkasse 10 (erfindungsgemäß vorzugsweise D6=D2)

- DK: Außendurchmesser der Karkasse in den Bereichen A während der Einstellung ihres Innendurchmessers auf D4; siehe Figur 5, zu messen dort über der Karkasslage 10
- DKₘₐₓ: größter Außendurchmesser der Karkasse während der Einstellung ihres Innendurchmessers auf D4; siehe Figur 5, zu messen dort über den Schulterfüllprofilen 12

- E: Axiale Erstreckung der Trommel 1
- RA: Rotationsachse

## Patentansprüche

1. Verfahren zum Aufbau eines Reifenrohlinges,
a) bei dem mittels einer ersten Vorrichtung Wulstkerne (11) hergestellt werden
b) und bei dem mittels einer zweiten Vorrichtung, nämlich einer radial expandierbaren Trommel (1) mit im wesentlichen horizontaler Rotationsachse (RA), die Karkasse konfektioniert wird,
c) und mit einer die Trommelperipherie (4) bildenden, zur Vergleichmäßigung der Pressung genügend dickwandigen Hülle (3) aus Gummi oder dergleichen ausgestattet ist,
d) wobei in der Trommelperipherie (4) Negative (6) angeordnet sind, die mit einer Evakuierpumpe (5) verbunden sind,
womit der Reifenrohling mit den folgenden Verfahrensschritten in der folgenden Reihenfolge aufgebaut wird:
A) Die expandierbare Trommel (1) wird auf einen Durchmesser (D3) gebracht,
B) wonach die Karkasse zunächst flach liegend konfektioniert wird, vorzugsweise beginnend mit den Seitenwänden (7) und/oder mit dem besonders luftdichten Innenliner (8), dann der ersten und danach ggf. der zweiten Karkasslage (10),
C) wonach ein mindestens 30-%iges - vorzugsweise 55-%iges bis 80-%iges - Vacuum in den Negativen (6) der Trommelperipherie (4) erzeugt wird,
D) wonach die Trommel (1) zumindest in dem oder den axialen Bereichen (A), die von den Wulstkernen (11) bei ihrem Überschieben und Positionieren überstrichen werden - vorzugsweise über ihrer gesamten axialen Erstreckung (E) - auf einen Durchmesser (D4) radial zusammengefahren wird, der (D4) kleiner ist als der für das Auflegen der Karkassbauteile (7, 8, 9, 10, 12) zuvor eingestellte Durchmesser (D3),
E) wobei die Karkasse, insoweit sie bis dahin durch Auflegen von Karkassbauteilen (7, 8, 9, 10, 12) auf die Trommel (1) gebildet wurde, der Zusammenfahrbewegung der Trommel (1) infolge der Vacuumerzeugung wellen- und faltenfrei folgt,
F) wobei der Außendurchmesser der noch flachen Karkasse auf einen so kleinen Wert (DK oder DKₘₐₓ) verkleinert wird, dass nachfolgend die Wulstkerne (11) ohne Berührung der Karkasse übergeschoben und positioniert werden können,
G) wonach die vorgefertigten Wulstkerne (11) über die Trommel (1) mit der darauf befindlichen Karkasse geschoben und axial positioniert werden, wonach das Vacuum gemäß Merkmal C abgeschaltet werden kann,
H) wobei nach Positionierung der vorgefertigten Wulstkerne (11) die Trommel (1) zumindest in den axialen Bereichen (A), die von den positionierten Wulstkernen (11) eingenommen werden, auf einen Durchmesser (D5) expandiert wird, der zumindest in etwa gleich dem Durchmesser (D3) ist, auf den die Trommel (1) zu Beginn des Karkassenaufbaues eingestellt wurde,
- bewirkend, dass die Karkasse hiernach über ihre gesamte axiale Erstreckung im wesentlichen frei ist von Stauch- und Dehnspannungen -
und größer ist als der zuvor zur axialen Positionierung der Wulstkerne (11) eingestellte Durchmesser (D4)
- bewirkend, dass die flach liegend gefertigte Karkasse und die Wulstkerne (11) radial gegeneinander gepresst werden und hierdurch genügende Haftung aneinander erzielen -
I) wonach die Trommel (1) wieder auf einen kleineren Durchmesser (D6) zusammengefahren wird und die Karkasse samt gesetzter Wulstkerne (11) von der Trommel (1) abgezogen wird, um sie zu einer Bombiereinrichtung zu befördern.

2. Verfahren nach Anspruch 1, dadurch gekennzeichnet, dass die zur Anpressung [gemäß Merkmal H von Anspruch 1] geforderte Expansion der Trommel (1) zumindest die beiden axial äußeren Bereiche (A) der Trommel (1) erfasst, die [siehe Figur 6] jeweils vom axial äußeren Trommelrand bis zur axial inneren Seite des jeweiligen Wulstkernes (11) reichen.

3. Expandierbare Trommel (1) zur Durchführung eines Verfahrens nach Anspruch 1 oder 2, die auf ihrer Außenseite Negative (6) aufweist, welche (6) mit einer Evakuierpumpe (5) in Verbindung stehen,
**dadurch gekennzeichnet**, dass die Trommel (1) außen eine Hülle (3) aus Gummi oder dergleichen aufweist, deren Außenseite die Trommelperipherie (4) bildet, und, dass diese besagte Hülle (3) auf ihrer Außenseite besagte Negative (6) aufweist.

4. Vorrichtung nach Anspruch 3, dadurch gekennzeichnet, dass die Hülle (3) auf ihrer gesamten Peripherie (4) ein dichtes Netz aus einer großen Zahl von Rillen (6b, 6c) aufweist, wobei diese Rillen (6b, 6c) von einer kleineren Zahl von Gullys (6a) aus mit Unterdruck speisbar sind.

5. Vorrichtung nach Anspruch 4, dadurch gekennzeichnet, dass die Rillen (6b, 6c) eine Breite und eine Tiefe von etwa 3 % des Trommeldurchmessers haben.

## Claims

1. Method of constructing a tyre blank,
a) wherein bead cores (11) are produced by means of a first apparatus,
b) and wherein the carcase is manufactured by means of a second apparatus, namely a radially expandable drum (1) having a substantially horizontal rotary axis (RA)
c) and having a sleeve (3) formed from rubber or the like, said sleeve forming the drum periphery (4) and being sufficiently thick-walled to distribute the pressure evenly,
d) negatives (6), which are connected to an evacuating pump (5), being disposed in the drum periphery (4),
whereby the tyre blank is constructed by the following method steps in the following sequence:
A) the expandable drum (1) is brought to a diameter (D3),
B) whereupon the carcase is initially manufactured so as to lie flat, preferably beginning with the sidewalls (7) and/or with the particularly airtight inner liner (8), then with the first and thereafter possibly with the second carcase ply (10),
C) whereupon a vacuum, at least a 30 % - preferably 55 % to 80 % - vacuum, is generated in the negatives (6) of the drum periphery (4),
D) whereupon the drum (1), at least in the axial region or regions (A) which are covered by the bead cores (11) as they are slipped-over and positioned - preferably over their entire axial extension (E) - is radially compressed to a diameter (D4) which (D4) is smaller than the diameter (D3) previously set for the depositing of the carcase components (7, 8, 9, 10, 12),
E) wherein the carcase, insofar as it was formed hitherto by placing carcase components (7, 8, 9, 10, 12) on the drum (1), follows in an undulation-free and fold-free manner the compression movement of the drum (1) as a consequence of the generation of a vacuum,
F) wherein the external diameter of the carcase, which is still flat, is reduced to such a small value (DK or DKₘₐₓ) that the bead cores (11) can subsequently be slipped-over and positioned without touching the carcase,
G) whereupon the prefabricated bead cores (11) are slipped over the drum (1) with the carcase situated thereon and are axially positioned, whereupon the vacuum according to feature C can be switched-off,
H) wherein, after positioning the prefabricated bead cores (11), the drum (1) is expanded, at least in the axial regions (A) which are occupied by the positioned bead cores (11), to a diameter (D5) which is at least substantially equal to the diameter (D3), to which the drum (1) was set at the beginning of the carcase construction,
- causing the carcase to be hereinafter substantially free of compressive strains and expansion stresses over its entire axial extension -
and which diameter (D5) is greater than the diameter (D4), which was previously set for the axial positioning of the bead cores (11),
- causing the carcase, which was manufactured so as to lie flat, and the bead cores (11) to be pressed radially towards one another and hereby achieving sufficient adhesion with one another -
I) whereupon the drum (1) is compressed again to a smaller diameter (D6), and the carcase, together with deposited bead cores (11), is removed from the drum (1) in order to convey it to an end-closing means.

2. Method according to claim 1, characterised in that the expansion of the drum (1), which is required for compression purposes [according to feature H of claim 1], includes at least the two axially outer regions (A) of the drum (1), which regions [see Figure 6] each extend from the axially outer drum edge to the axially inner side of the respective bead core (11).

3. Expandable drum (1) for accomplishing a method according to claim 1 or 2, which drum has negatives (6) on its outside, which negatives (6) communicate with an evacuating pump (5), characterised in that the drum (1) has externally a sleeve (3) which is formed from rubber or the like, the outside of which sleeve forms the drum periphery (4), and in that this said sleeve (3) has said negatives (6) on its outside.

4. Apparatus according to claim 3, characterised in that the sleeve (3) has, over its entire periphery (4), a compact network formed from a large number of grooves (6b, 6c), these grooves (6b, 6c) being chargeable with reduced pressure from a smaller number of channels (6a).

5. Apparatus according to claim 4, characterised in that the grooves (6b, 6c) have a width and a depth of substantially 3 % of the drum diameter.

## Revendications

1. Procédé pour fabriquer une ébauche de pneumatique,
a) selon lequel des tringles (11) sont fabriqués à l'aide d'un premier dispositif,
b) la carcasse est confectionnée à l'aide d'un second dispositif, à savoir un tambour (1) dilatable radialement, qui possède un axe de rotation (RA) essentiellement horizontal, et
c) comportant une enveloppe (3) en caoutchouc ou analogue formant la périphérie (4) du tambour et possédant une paroi suffisamment épaisse pour uniformiser la pression,
d) des parties en creux (6), qui sont reliées à une pompe de création de vide (5), étant disposées dans la périphérie (4) du tambour,
l'ébauche de pneumatique étant construite à l'aide des étapes opératoires suivantes selon la séquence suivante:
A) le tambour dilatable (1) est réglé sur un diamètre (D3),
B) ensuite la carcasse est confectionnée tout d'abord en étant disposée à plat, de préférence en commençant par les parois latérales (7) et/ou le revêtement intérieur (8) notamment étanche à l'air, puis la première couche de la carcasse et ensuite éventuellement la seconde couche de la carcasse (10),
C) ensuite un vide d'au moins 30 % - de préférence de 55 % à 80 % - est produit dans les parties en creux sur la périphérie (4) du tambour,
D) ensuite le tambour est comprimé radialement au diamètre (D4) au moins dans la ou les zones axiales (A), qui sont couvertes par les tringles (11) lors de leur emmanchement et de leur positionnement - de préférence sur toute leur étendue axiale (E) -, le diamètre (D4) étant inférieur au diamètre (D3) réglé au préalable pour l'application des composants (7, 8, 9, 10, 12) de la carcasse,
E) dans la mesure où la carcasse a été formée jusqu'alors par application de composants (7, 8, 9, 10, 12) de la carcasse sur le tambour (1), la carcasse suit le déplacement de contraction du tambour (1) en raison de la production du vide, sans former d'ondulations ni de plis,
F) le diamètre extérieur de la carcasse encore à plat étant réduit à une valeur suffisamment faible (DK ou DKₘₐₓ) pour qu'ensuite les tringles (11) peuvent être emmanchées ou positionnées sans contact avec la carcasse,
G) les tringles préfabriquées (11) sont ensuite repoussées et positionnées axialement au-dessus du tambour (1) avec la carcasse située sur ce dernier, à la suite de quoi le vide réalisé conformément à la caractéristique C peut être supprimé,
H) auquel cas après le positionnement des tringles préfabriquées (11), le tambour (1) est dilaté, au moins dans les zones axiales (A), qui sont occupées par les tringles positionnées (11), à un diamètre (D5), qui est au moins approximativement égal au diamètre (D3), sur lequel le tambour (1) a été réglé au début de la fabrication de la carcasse,
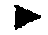 avec pour effet que la carcasse est ensuite essentiellement exempte de contraintes de compression et de dilatation, sur toute sur son étendue axiale -
et est supérieur au diamètre (D4) réglé au préalable pour le positionnement axial des tringles (11),
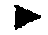 avec pour effet que la carcasse fabriquée à plat et les tringles (11) sont repoussées radialement les unes contre les autres et qu'une adhérence réciproque suffisante est obtenue de ce fait -
I) puis le tambour (1) est à nouveau comprimé à un diamètre inférieur (D6) et la carcasse ainsi que les tringles (11) installées sont retirées du tambour (1) pour être envoyée à un dispositif de bombement.

2. Procédé selon la revendication 1, caractérisé en ce que la dilatation du tambour (1), qui est requise pour le serrage [conformément à la caractéristique H de la revendication 1], porte au moins sur les deux parties (A), extérieures du point de vue axial, du tambour (1), qui [voir figure 6] s'étendent respectivement depuis le bord extérieur du point de vue axial du tambour jusqu'au côté intérieur du point de vue axial de la tringle respective (11).

3. Tambour dilatable (1) pour la mise en oeuvre d'un procédé selon la revendication 1 ou 2, qui comporte, sur sa face extérieure, des parties en creux (6), lesquelles parties en creux (6) sont reliées à une pompe de création de vide (5), caractérisé en ce que le tambour (1) possède extérieurement une enveloppe (3) en caoutchouc ou analogue, dont la face extérieure forme la périphérie (4) du tambour, et que ladite enveloppe (3) possède lesdites parties en creux (6) sur sa face extérieure.

4. Dispositif selon la revendication 3, caractérisé en ce que l'enveloppe (3) possède, sur l'ensemble de sa périphérie (4), un réseau étanche formé d'un grand nombre de rainures (6b, 6c), ces rainures (6b, 6c) pouvant être mises en dépression à partir d'un nombre plus faible de gorges (6a).

5. Dispositif selon la revendication 4, caractérisé en ce que les rainures (6b, 6c) ont une largeur et une profondeur égales à environ 3 % du diamètre du tambour.
